# EUROPEAN PATENT SPECIFICATION

(11) **EP 0 797 856 B1**
(45) Date of publication and mention of the grant of the patent: **21.10.1998**
(21) Application number: 95916852.7
(22) Date of filing: 28.04.1995
(51) Int. Cl.: H02G 3/22, F16L 5/02

(54) **BUSHING**
KABELDURCHFÜHRUNG
TRAVERSEE ISOLANTE

(30) Priority: 04.05.1994 NL 9400745
(43) Date of publication of application: 01.10.1997
(73) Proprietor: Beele Engineering B.V., 7122 NZ Aalten (NL)
(72) Inventor: BEELE, Johannes, Alfred, NL-7122 NZ Aalten (NL)
(74) Representative: Hooiveld, Arjen Jan Winfried
(86) International application number: NL9500156
(87) International publication number: WO9531026

(56) References cited:
- EP-A- 0 183 300
- EP-A- 0 404 266
- DE-U- 8 807 280
- GB-A- 2 186 440

## Description

The invention relates to a bushing for the sealing passage of a cable, pipe and the like through a wall, comprising a frame made of a rigid material which may be sealingly inserted in an aperture provided in the wall, as well as one of more parallelepipedal blocks of a resilient material such as rubber which may be composed from two identical halves, which blocks in their composite state exhibit a bore adapted with narrow tolerances to the shape and dimensions of a cable to be passed through, which blocks are inserted in the frame aperture so as to be a fine fit, with the two halves of every block encasing a cable, whilst in additioning tightening means with a pressure body are present which compress the blocks inserted in the frame aperture in the plane of this aperture such that a sealing compression is effected between the two halves of any one block, between the outer faces of mutually adjacent blocks, between the wall of the bores and the outer surface of the cables contained therein, as well as between the outer faces of the blocks and the inner walls of the frame.

Such bushing is known from GB-A-2,186,440. EP-A-0183300 also discloses such a bushing, except for the feature concerning the internal and external ribs of the blocks.

Several drawbacks attach to such known bushings, especially the following ones:
1. The blocks used in these known bushings are made of incompressible rubber, so that when tolerances of, say, more than 1 mm have occurred in the manufacture of the frame or the blocks, these blocks can hardly if at all be thrust into the frame, or they lie loose in the frame.
2. The known bushings contain a pressure body in the form of a rigid pressure plate, as well as a thrust bolt as the tightening means. Threading the pressure bolt down causes a concentrated load - which in actual practice may amount to a few tons! - to be exerted upon the rigid pressure plate in order to achieve as uniform a distribution as practicable of downward directed forces acting upon the blocks inserted in the frame. By these forces all blocks in the frame should be deformed in such a way that a proper sealing of, for instance, cables passed through is ensured.
   In actual practice, however, the distribution of forces proves to be nowhere near uniform, because a counter-reaction of the non-compressible rubber mass of the blocks incited by the aforesaid enormous forces reduces the downward directed pressure especially near the sides of the frame. Also, in actual practice it is only the blocks disposed in the uppermost zone inside the frame which undergo the aforesaid requisite deformation and, in addition, these blocks absorb virtually the entire downward directed pressure. The said deformation develops outwards of the frame, which is obviously highly undesirable.
   The outcome of the drawbacks so far mentioned in item 2 proves to be in practice not only that the blocks with the cables passed through them in the uppermost zone of the frame are subject to severe deformation, which is generally found to be permanent, so that proper sealing has become impossible, but also that the blocks disposed in the bottom zone of the frame do not undergo the aforesaid requisite deformation, which again results in an inadequate sealing of, for instance, cables passed through, partly on account of the localized appearance of fissures between adjacent blocks.
3. The pressure plate used in the known bushings is provided with a recess on its edges in order that this pressure plate may invariably be a true fit inside the frame even in the event of tolerances in the frames dimensions. The said recess, however, causes an upward displacement of the rubber of the blocks which is undergoing deformation during compression. Under operating conditions of the bushing, an irregular edge of protruding rubber may appear on both edges of the pressure plate as a result.
4. The bushing known from EP-A-0183300 is provided with rod-shaped elements which may be supported with their ends in two oppositely disposed grooves in flanges of the frame, whilst the central part of a rod-shaped element may be located in a groove of a half block such that it prevents any displacement in a transverse direction relative to the plane of the frame.
   As the rod-shaped elements are frequently of especially sturdy design in order to afford extra protection against displacement and the grooves are not generally given corresponding extra depth, it turns out in actual practice for reasons mentioned hereinbefore under item 2 that inadequate sealing is attained between rows of blocks which a rod-shaped element is confined. If the rod-shaped elements were to be extra thin, an insufficient prevention against displacement would be the result, according to which a half block in practice could "shift" after all.
5. The frame used in the known bushings is composed by, for instance, welding angle irons or metal strips together. This construction gives rise to small continuous weld fissures or beads in the angles of the frame all its adverse consequences on the sealing.
   Owing to the non-compressibility of the rubber, the blocks cannot fill up these weld fissures in particular.
6. In the known bushings, the downward directed forces produced by the tightening means should deform all blocks contained within the frame as well as, for instance, the resilient cables passed through in such a way that an effective sealing is obtained.
   This deformation frequently tends to lead to unacceptable damage to the cables, especially to cables passed through the uppermost zone of the frame. In addition, when armoured and/or non-compressible cables are passed through, only deformation of the blocks disposed within the frame takes place, leading to inadequate sealing.
7. In actual practice the known bushings prove insufficiently fire-resistance, as will be elucidated hereinafter.
   A conflagration present on, for instance, one side of the known bushing under operating conditions reaches a temperature of about 900 °C. Heat from the conflagration is transmitted by
   - the frame
   - through bolts
   - the steel pressure plate
   - conductors of cables passed through
   - rod-shaped elements
   - rubber lead-through blocks.
From the heat-transfer coefficient of steel it becomes instantly clear that at the aforesaid conflagration temperature the side facing away from the conflagration will undergo a considerable rise in temperature (180 °C is generally considered the maximum admissible). In consequence, the three first-named component parts will very soon show the admissible rise in temperature, if not protected by extra insulation. Depending upon the mass of the (copper) conductors, which in fact have an even higher coefficient of heat transfer than steel, a very rapid transmission of heat from the conflagration takes place. Adequate insulation of cables passed through is one mean of restricting a measurable rise in temperature on the side facing away from the fire. With the known bushing this is impossible, because there is no direct contact between the conductors and any heat-absorbing rubber. The rod-shaped elements and the rubber lead-through blocks will exhibit a very slight heat transfer (the K-value of heat-resistant rubber is about 0.18 W/mK). With aforesaid conflagration temperature, the inadequate fire resistance of the known bushing will cause cable sheathing to soften, to emit a good deal of smoke and even to ignite in an unfavourable situation. These effects are strengthened by the inadequate sealing provided by the known bushing, as has been expounded in the foregoing items 1 to 6 inclusive. Hot flue gases will be forced through all apertures by positive pressure in a burning space and ultimately ignite the flue gases emitted by insulating materials.

The object of the present invention is to provide a bushing for the optimum sealing passage of a cable, pipe and like through a wall, which bushing possesses an excellent fire resistance.

In order to accomplish this objective a bushing of the kind referred to in the preamble is according to the invention characterized in that said tightening means and the plate element are integrated in one removable pressure body. As a result of this a very good sealing is realized, since a uniformly distributed pressure is exerted on the blocks (that is, there is no longer a pressure bolt being threaded in and a pressure plate on which a concentrated (point) load of a few tons is exerted by said pressure bolt), whilst it is no longer necessary to use a sealing piece to be placed above the pressure plate. Reference is hereby made to the above item 2. Since there is not only a uniformly distributed pressure, but also a lower pressure, it will suffice to use a thinner frame, whilst weld fessures or beads that may be present therein (compare the above item 5) can no longer have an adverse effect on the sealing.

One embodiment of a bushing according to the invention is characterized in that under operating conditions said tightening means are capable of exerting a multidirectional pressure in the plane of the frame aperture. This will again result in a better sealing, whereby the pressure body can sealingly "lock itself into position" within the frame.

A further embodiment of a bushing according to the invention is characterized in that said tightening means form mechanical, pneumatic, electromagnetic and/or hydraulic tightening means.

A further embodiment of a bushing according to the invention is characterized in that said tightening means are comprised of at least one rotatable shaft provided with at least one cam.

A further embodiment of a bushing according to the invention is characterized in that said shaft can be engaged from outside so as to be rotated. This makes the present system very user-friendly.

A further embodiment of a bushing according to the invention is characterized in that said blocks are provided, at last along part of their length, with circumferential internal ribs, and that the blocks, whose outsides abut against an inner wall of the frame under operating conditions of the bushing, are at least partially provided with external ribs on the outside. The use of rod-shaped elements known from EP-A-0 182 300 as anchoring devices has thus become redundant.

A further embodiment of a bushing according to the invention is characterized in that the blocks and the pressure body are dimensioned such that, under operating conditions of the bushing, they extend outwards on at least one side of the frame in a direction transverse to the plane of the frame, whilst the pressure body whose outer faces rest against an inner wall of the frame under operating conditions of the bushing, are provided with external ribs along at least a part of the said outer faces.

The presence of an inner and an outer profile in the form of flexible internal and external ribs ensures an optimum sealing at all times, since any tolerances in the dimensions of blocks, frame and cables to be passed through can easily be taken up by compression of these flexible rubber ribs without entailing compression or deformation of the blocks or the individual cables passed through the frame, even when the necessary compressive forces are applied. The outward extension present on at least one side of the frame transverse to the plane of the frame under operating conditions of the bushing has the advantage that the bushing possesses excellent fire resistance in that directions because of the increased quantity of, for instance, fire-resistant rubber.

A further embodiment of a bushing according to the invention is characterized in that blocks which are placed on top of each other under operating conditions of the bushing, are provided with a profile on their adjacent outer faces. Less sealing compression is thereby needed so as to ensure a tight sealing between adjacent blocks lying above each other during these conditions.

A further embodiment of a bushing according to the invention is characterized in that the blocks are dimensioned such that under operating conditions of the bushing, they extend outwards on both sides of the frame in a direction transverse to the frame. The fire resistance of the bushing according to the invention is thereby optimized because of the symmetry between rubber masses of, say, 60 mm disposed on both sides of the frame.

A further embodiment of a bushing according to the invention is characterized in that the external and/or internal ribs have a saw-tooth or triangular cross-section. In practice, internal and/or external ribs so shaped prove to afford optimum sealing.

The invention will now be elucidated with reference to the accompanying figures, in which:
figures 1- 9 show the known bushing or parts thereof according to the state of the art;
figure 10-20 represent the pressure body and the blocks according to the invention.

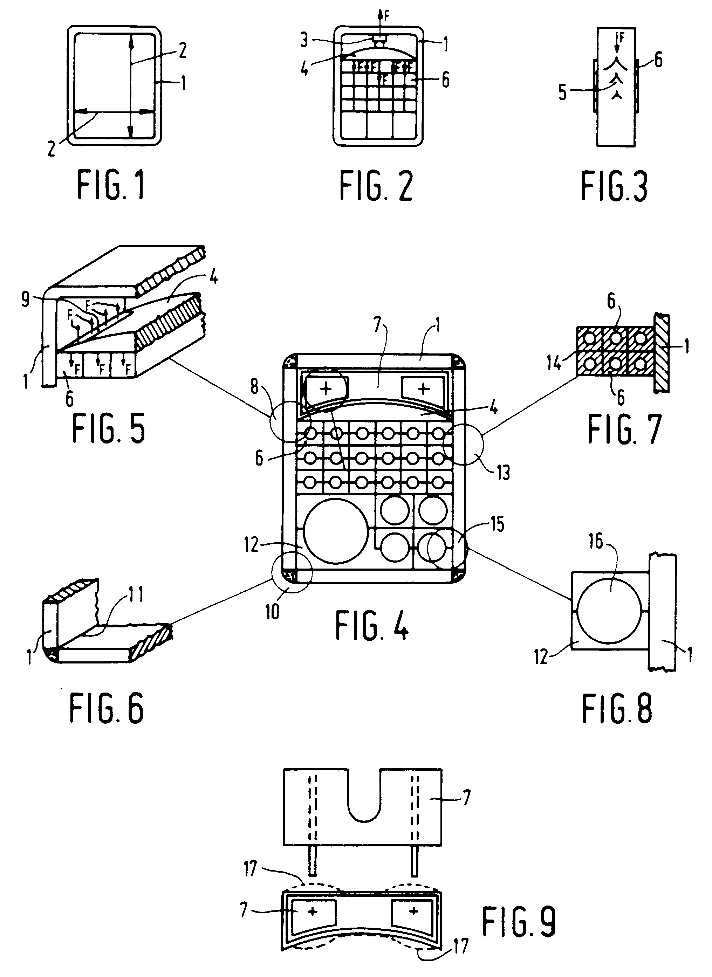

Figure 1 is a schematic view of the known bushing according to the state of the art with a frame 1 which may exhibit tolerances in dimensions in the directions indicated by arrows 2, so that the known blocks can either hardly, if at all, be pushed into the frame 1 or lie loose in frame 1.

Figure 2 depicts the known bushing with the frame 1 of Figure 1, showing how the forces designated F are distributed when threating down a thrust bolt 3 causes a concentrated load to be exerted upon a rigid pressure plate 4.

Figure 3 is a side view of the known bushing according to Figure 2. Forces F acting in the directions 5 cause blocks 6 disposed in the uppermost zone of frame 1 in particular to be deformed towards the outer sides of frame 1.

Figure 4 represents the known bushing with a sealing plate 7 according to the state of the art.

Figure 5 depicts a detail of the known bushing designated 8 in Figure 4. Edges of the pressure plate 4 have a recess 9 in order that the pressure plate may at all times be inserted into the frame 1, also taking into account tolerances in the dimensions of frame 1. An upward movement of rubber of the blocks 6 deforming during compression, which upward movement results from forces F acting in the direction of the arrows, gives rise to an irregular edge of protruding rubber on both edges of the pressure plate 4.

Figure 6 shows a detail of the known bushing designated 10 in Figure 4. As the frame 1 is composed by welding strips or similar component parts together, the angles of the frame 1 may be liable to small continuous weld fissures 11 which cannot be sealed by non-compressible blocks 12.

Figure 7 represents a detail of the known bushing designated 13 in Figure 4. For reasons mentioned herein before, no adequate sealing proves feasible in actual practice between rows of blocks 6 between which a rod-shaped element 14 is confined.

Figure 8 depicts a detail of the known bushing designated 15 in Figure 4. As the blocks 6 disposed in the uppermost zone of frame 1 absorb substantially the entire downward directed pressure exerted by the pressure plate 4 and the thrust bolt 3, a cable 16 passed through block 12 is not adequately sealed since, failing sufficient downward directed pressure on the spot, the halves of block 12 are not compressed sufficiently tight under operating conditions, so that continuous interfacial fissures persist between the said halves.

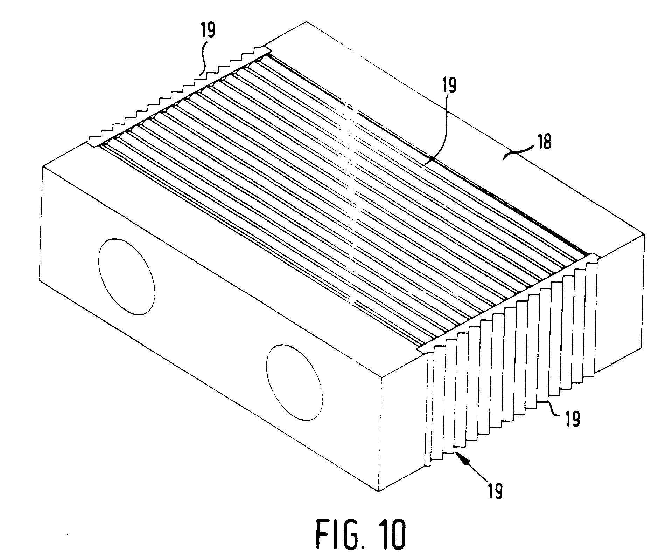

Figure 9 shows a plan and a front view of the sealing plate of Figure 4. The forces indicated by F and acting in the direction of the arrows cause a lateral deformation 17 relative to frame 1 (denoted by dotted lines) of the blocks 6 disposed in the uppermost zone of frame 1.

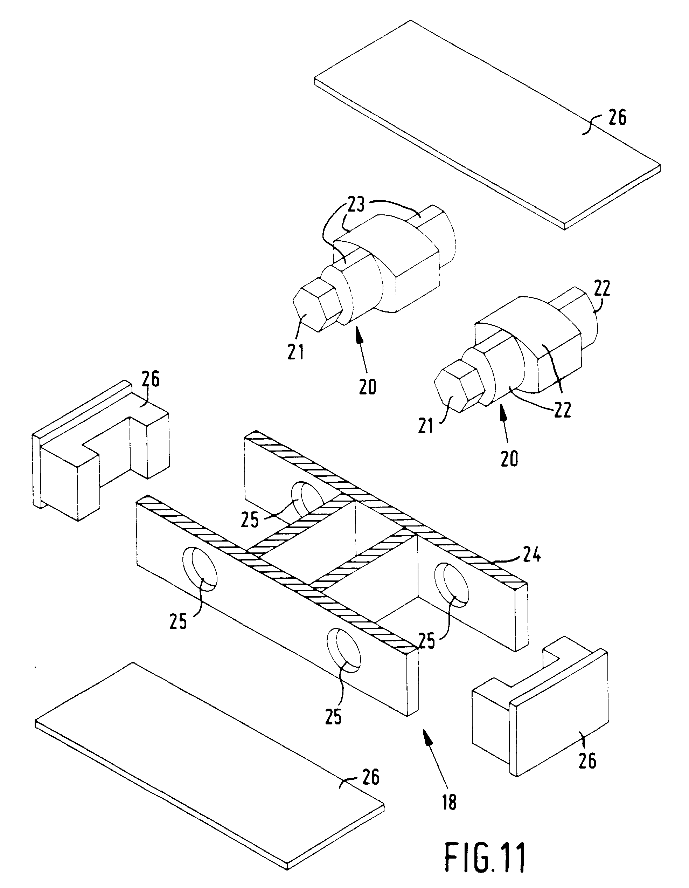

Figure 10 is a perspective view of a pressure body 18 according to the invention, which is vulcanized in a fire-resistant rubber. Said pressure body 18 is at its sealing walls 19 provided with a profile consisting of ribs having a triangular cross-section, so that tolerances in the dimensions of the blocks, the frame and cables to be passed can be readily accommodated for by compression of the flexible ribs. It is noted that in principle the pressure body 18 may be provided at a random location, since the tightening means incorporated in the pressure body 18 (compare Figure 11) are capable of exerting a multidirectional pressure in the plane of the frame aperture. In practice, however, it is often preferred to mount the pressure body 18 in the same place as the rigid pressure plate 4 according to Figure 4, whereby - as already said before - it is no longer necessary to use the sealing piece 7.

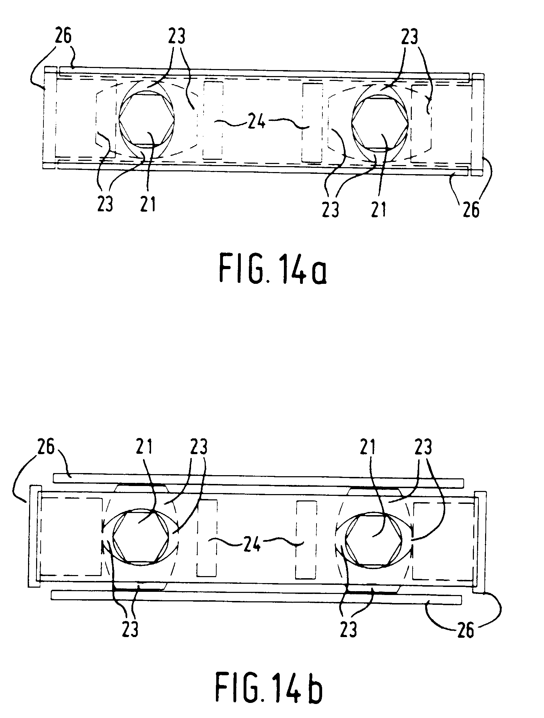

Figure 11 shows the pressure body 18 with the tightening means 20 integrated therein in disassembled condition, whilst no vulcanization in rubber has taken place. The tightening means 20 are in the form of two shafts 21, which are each provided with three eccentrics 22, each of said eccentrics in turn being provided with two cams 23. The actual pressure body 18 includes a frame 24 with holes 25 for the tightening means 20, as well as substantially plate-shaped elements 26. The operation of these parts will be explained in more detail hereafter with reference to Figure 14.

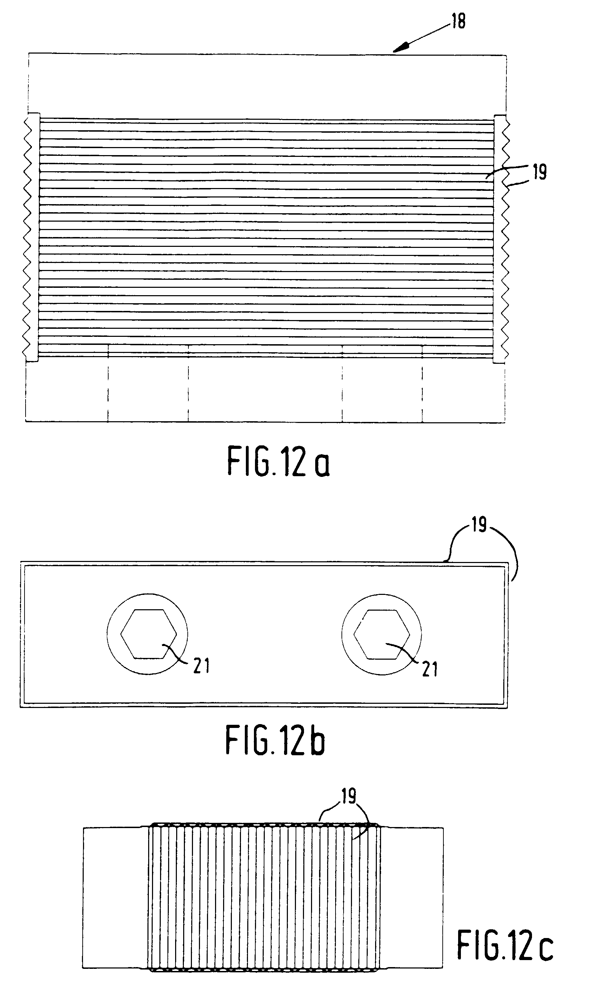

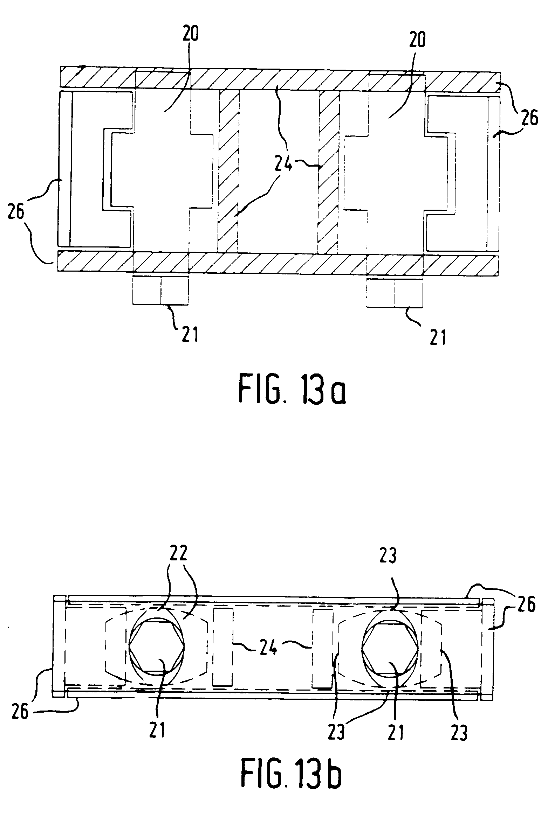

Figures 12a, b and c show the pressure body 18 according to Figure 1 in plan view, in front view and in side view respectively, whilst Figures 13a and b diagrammatically illustrate the pressure body 18 of Figure 11 in plan view and in front view respectively, but now in assembled condition.

Figure 14a shows the pressure body 18 according to Figure 13b with the tightening means 20 in condition of rest. By rotating the shafts 21 by means of a hexagonal spanner, the eccentrics 22 with their respective cams 23 are moved to a position in which the substantially plate-shaped elements 26 are pressed outwards (Figure 14b). A multidirectional pressure is exerted in the plane of the frame aperture, therefore. Thus a sealing pressure is created between the halves of the blocks mutually, between the outer surfaces of the blocks mutually, between the walls of the bores and the outsides of the cables present therein, and also between the outer surfaces of the blocks and the inner walls of the frame.

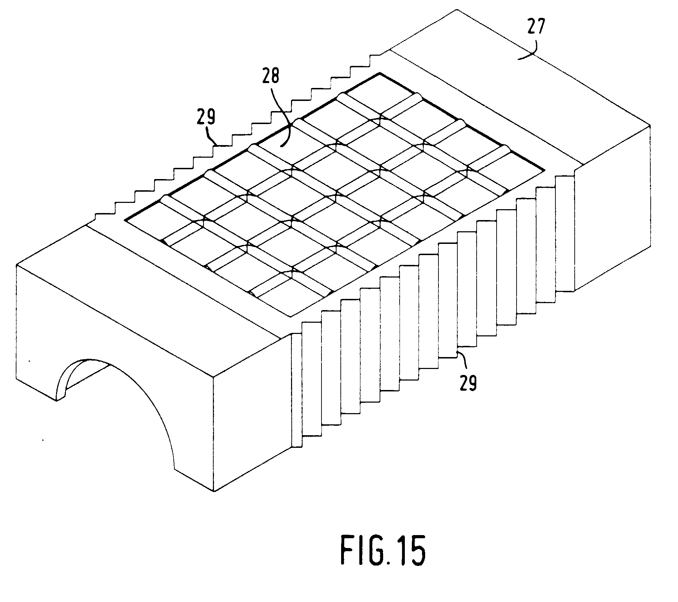

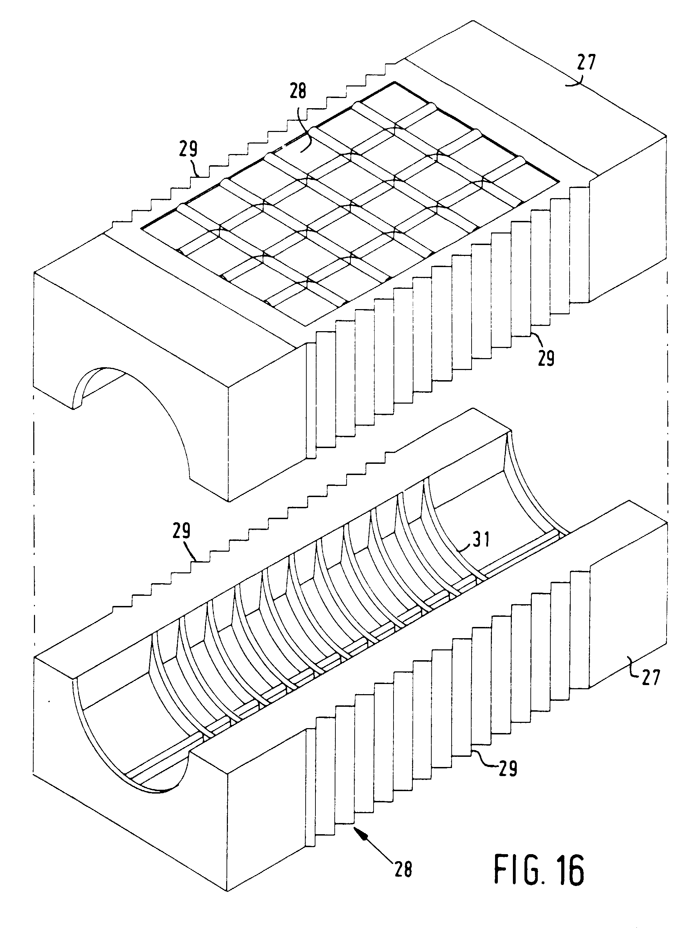

Figures 15 and 16 show a perspective view of an embodiment of halves 27 of a parallelepipedal block of a bushing according to the invention, whereby upper- and lower wall profile 28 and a sidewall profile 29 in the form of ribs with a triangular cross-section are present. The presence of these profiles 28,29 ensures an optimum sealing at all times, since any tolerances in the dimensions of blocks can easily be taken up by compression of these profiles. Furthermore, the presence of these profiles 28,29 ensures that no deformation of rubber occurs and that, as already mentioned, less sealing compression is needed.

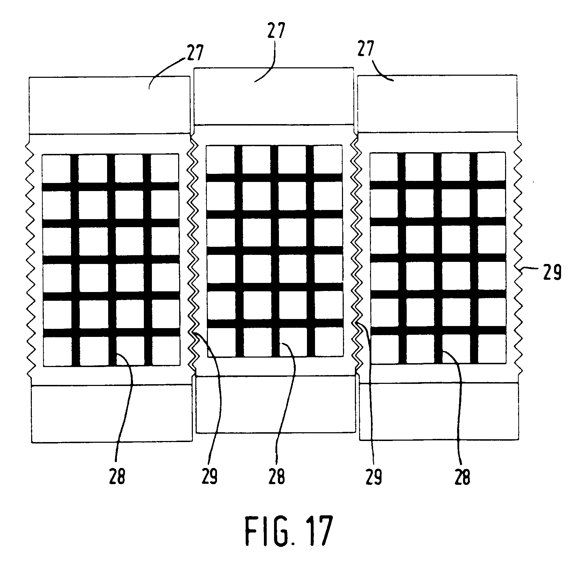

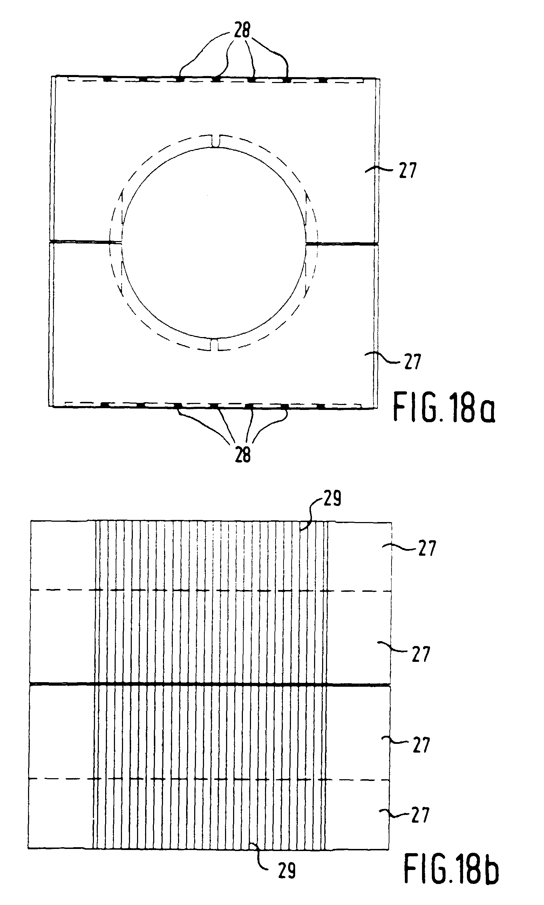

Figure 17 shows how cooperating profiles 29 in the form of ribs with a triangular cross-section take care of an optimum sealing between adjacent blocks. The same counts, mutatis mutandis, with respect to profiles 28 concerning blocks which are placed on top of each other. Figure 18a depicts in this respect a front view of one block, whereas figure 18b shows a sight view of two blocks placed on top op each other.

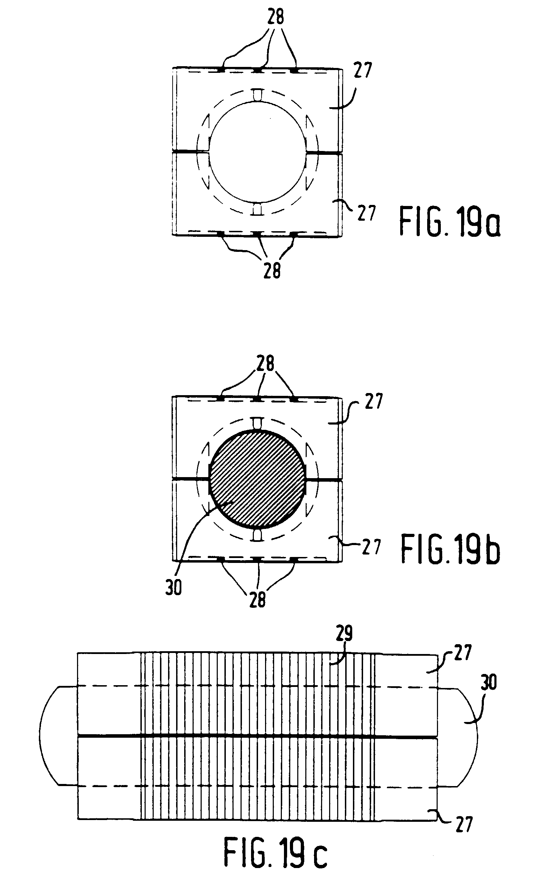

Figure 19a corresponds with figure 18a, and figure 19b corresponds with figure 19a, on the understanding that in the bore of the block a massive rubber rod is mounted. The advantage thereof is that, in contrast to the prior art, no use is made of "blind" blocks (i.e. blocks without any bore) for the filling of the frame, but that only blocks with a bore are used which, when no cable is passed through, are "filled" with a rod 30. This rod 30 is detachably mounted, so that in a flexible manner, dependent on the need on a specific moment, more or less cables can be passed through, without deteriorating the sealing properties of the bushing.

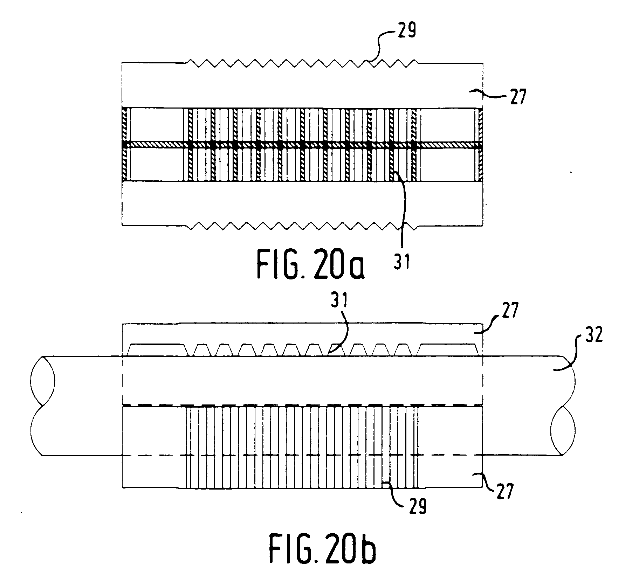

In figure 20a a top view of a block half 27, as being depicted below in figure 16, which is provided with an internal profile 31, substantially formed by circumferential internal ribs. Figure 20b shows a (partially cut away) side view of two block halves 27 placed on top of each other, as shown separately in figure 16, whereby a cable 32 is passed through.

## Claims

1. A bushing for the sealing passage of a cable, pipe and the like through a wall, comprising a frame (1) made of a rigid material which may be sealingly inserted in an aperture provided in the wall, as well as one or more parallelepipedal blocks (27) of a resilient material such as rubber which may be composed from two identical halves, which blocks (27) in their composite state exhibit a bore (25) adapted with narrow tolerances to the shape and dimensions of a cable to be passed through, which blocks (27) are inserted in the frame (1) aperture so as to be a fine fit, with the two halves of every block (27) encasing a cable, whilst in addition at least a plate element (26), and tightening means (20) with a pressure body (18) are present which compress the blocks (27) inserted in the frame (1) aperture in the plane of this aperture such that a sealing compression is effected between the two halves of any one block, between the outer faces of mutually adjacent blocks (27), between the wall of the bores and the outer surface of the cables contained therein, as well as between the outer faces of the blocks (27) and the inner walls of the frame (1), whereby said pressure body (18) is a separate unit characterized in that the tightening means (20) and the plate element (26) are integrated in one removable pressure body (18).

2. A bushing according to claim 1, characterized in that under operating conditions said tightening means (20) are capable of exerting a multidirectional pressure in the plane of the frame (1) aperture.

3. A bushing according to claim 1 or 2, characterized in that said tightening means (20) form mechanical, pneumatic, electromagnetic and/or hydraulic tightening means (20).

4. A bushing according to claim 1, 2 or 3, characterized in that said tightening means (20) are comprised of at least one rotatable shaft (21) provided with at least one cam (23).

5. A bushing according to claim 4, characterized in that said shaft (21) can be engaged from outside so as to be rotated.

6. A bushing according to any one of the preceding claim 1-5, characterized in that said blocks (27) are provided, at last along part of their length, with circumferential internal ribs, and that the blocks (27), whose outsides abut against an inner wall of the frame (1) under operating conditions of the bushing, are at least partially provided with external ribs (29) on the outside.

7. A bushing according to any one of the preceding claim 1-6, characterized in that the blocks (27) and the pressure body (18) are dimensioned such that, under operating conditions of the bushing, they extend outwards on at least one side of the frame (1) in a direction transverse to the plane of the frame (1), whilst the pressure body (18) whose outer faces rest against an inner wall of the frame (1) under operating conditions of the bushing, are provided with external ribs (19) along at least a part of the said outer faces.

8. A bushing according to any one of the preceding claim 1-7, characterized in that blocks (27) which are placed on top of each other under operating conditions of the bushing, are provided with a profile on their adjacent outer faces.

9. A bushing according to any one of the preceding claim 1-8, characterized in that the blocks (27) are dimensioned such that under operating conditions of the bushing, they extend outwards on both sides of the frame (1) in a direction transverse to the frame (1).

10. A bushing according to any one of the preceding claim 1-9, characterized in that the external and/or internal ribs (19,29) have a saw-tooth or triangular cross-section.

11. A pressure body (18) suitable for application in the bushing according to one of the claims 1-10, whereby the pressure body (18) contains a block of a resilient material, tightening means (20), and at least a plate element (26) characterized in that the tightening means (20) and the plate element (26) are integrated in the pressure body (18).

## Patentansprüche

1. Eine Kabeldurchführung zum abgedichteten Durchführen eines Kabels, Rohres oder dergleichen durch eine Wand, mit einem Rahmen (1) aus einem starren Material, der in eine in der Wand vorgesehene Öffnung abdichtend eingesetzt sein kann, sowie einem oder mehreren quaderförmigen Block/Blöcken (27) aus einem elastischen Material, wie z.B. Gummi, der/die aus zwei identischen Hälften zusammengesetzt sein kann/können, wobei die Blöcke (27) in ihrem zusammengesetzten Zustand eine Bohrung (25) aufweisen, die mit geringen Toleranzen an die Gestalt und Abmessungen eines hindurchzuführenden Kabels angepaßt ist, wobei die Blöcke (27) derart in die Rahmen (1)-Öffnung eingesetzt sind, daß sie sich in eine gute Passung aufweisen, wobei die zwei Hälften jedes Blockes (27) ein Kabel umgeben, während zusätzlich wenigstens ein Plattenelement (26) und Anpreßmittel (20) mit einem Druckkörper (18) vorhanden sind, die die in die Rahmen (1)-Öffnung eingesetzten Blöcke (27) in der Ebene dieser Öffnung derart zusammendrücken, daß zwischen den zwei Hälften jedes Blockes, zwischen den Außenseiten zueinander benachbarter Blöcke (27), zwischen der Wand der Bohrungen und der Außenfläche der darin enthaltenen Kabel sowie zwischen den Außenseiten der Blöcke (27) und den Innenwänden des Rahmens (1) eine Abdichtpressung bewirkt wird, wobei der Druckkörper (18) eine separate Einheit ist, dadurch gekennzeichnet, daß die Anpreßmittel (20) und das Plattenelement (26) in einem auswechselbaren Druckkörper (18) integriert sind.

2. Eine Kabeldurchführung nach Anspruch 1, dadurch gekennzeichnet, daß die Anpreßmittel (20) unter Betriebsbedingungen einen Druck in mehreren Richtungen in der Ebene der Rahmen (1)-Öffnung ausüben können.

3. Eine Kabeldurchführung nach Anspruch 1 oder 2, dadurch gekennzeichnet, daß die Anpreßmittel (20) mechanische, pneumatische, elektromagnetische und/oder hydraulische Anpreßmittel (20) bilden.

4. Eine Kabeldurchführung nach Anspruch 1, 2 oder 3, dadurch gekennzeichnet, daß die Anpreßmittel (20) aus wenigstens einer drehbaren Welle (21) bestehen, die mit wenigstens einem Nocken (23) versehen ist.

5. Eine Kabeldurchführung nach Anspruch 4, dadurch gekennzeichnet, daß die Welle (21) zum Drehen von der Außenseite ergriffen werden kann.

6. Eine Kabeldurchführung nach irgendeinem der vorangehenden Ansprüche 1 bis 5, dadurch gekennzeichnet, daß die Blöcke (27) wenigstens entlang eines Teils ihrer Länge mit Umfangsinnenrippen versehen sind und daß die Blöcke (27), deren Außenseiten unter Betriebsbedingungen der Kabeldurchführung gegen eine Innenwand des Rahmens (1) stoßen, zumindest teilweise mit Außenrippen (29) auf der Außenseite versehen sind.

7. Eine Kabeldurchführung nach irgendeinem der vorangehenden Ansprüche 1 bis 6, dadurch gekennzeichnet, daß die Blöcke (27) und der Druckkörper (28) derart dimensioniert sind, daß sie sich unter Betriebsbedingungen der Kabeldurchführung auf wenigstens einer Seite des Rahmens (1) in einer zu der Ebene des Rahmens (1) transversalen Richtung nach außen erstrecken, während der Druckkörper (18), dessen Außenseiten unter Betriebsbedingungen der Kabeldurchführung gegen eine Innenwand des Rahmens (1) liegen, mit Außenrippen (19) entlang wenigstens eines Teils der besagten Außenseiten versehen sind.

8. Eine Kabeldurchführung nach irgendeinem der vorangehenden Ansprüche 1 bis 7, dadurch gekennzeichnet, daß Blöcke (27), die unter Betriebsbedingungen der Kabeldurchführung übereinander angeordnet sind, an ihren benachbarten Außenseiten mit einem Profil versehen sind.

9. Eine Kabeldurchführung nach irgendeinem der vorangehenden Ansprüche, dadurch gekennzeichnet, daß die Blöcke (27) derart dimensioniert sind, daß sie sich unter Betriebsbedingungen der Kabeldurchführung auf beiden Seiten des Rahmens (1) in einer zu dem Rahmen (1) transversalen Richtung nach außen erstrecken.

10. Eine Kabeldurchführung nach irgendeinem der vorangehenden Ansprüche 1 bis 9, dadurch gekennzeichnet, daß die Außen- und/oder Innenrippen (19, 29) einen sägezahnförmigen oder dreieckigen Querschnitt aufweisen.

11. Ein Druckkörper (18) für eine Kabeldurchführung nach einem der Ansprüche 1 bis 10, wobei der Druckkörper (18) einen Block aus einem elastischen Material, Anpreßmittel (20) und wenigstens ein Plattenelement (26) enthält, dadurch gekennzeichnet, daß die Anpreßmittel (20) und das Plattenelement (26) in dem Druckkörper (18) integriert sind.

## Revendications

1. Manchon pour le passage étanche d'un câble, tuyau et analogue à travers une paroi, comprenant un cadre (1) constitué en un matériau rigide qui peut être introduit de façon étanche dans une ouverture prévue dans la paroi, ainsi qu'un ou plusieurs blocs parallélépipédiques (27) d'un matériau résilient, tel que du caoutchouc, qui peuvent être composés de deux moitiés identiques, lesquels blocs (27), dans leur état assemblé, présentent un alésage (25) formé avec des tolérances étroites à la forme et aux dimensions du câble qui doit passer à travers, lesquels blocs (27) sont introduits dans l'ouverture du cadre (1), de façon à constituer un bon ajustement, les deux moitiés de chaque bloc (27) enveloppant un câble, tandis que, en outre, au moins un élément de plaque (26) et un moyen de serrage (20) comportant un corps presseur (18) sont prévus, qui compriment les blocs (27) introduits dans l'ouverture du cadre (1), dans le plan de cette ouverture, de telle façon qu'une compression d'étanchéité soit réalisée entre les deux moitiés de chacun des blocs, entre les faces extérieures des blocs mutuellement adjacents (27), entre la paroi des alésages et la surface extérieure des câbles qui y sont contenus, aussi bien qu'entre les faces extérieures des blocs (27) et les parois intérieures du cadre (1), tandis que ledit corps presseur (18) est constitué par une unité séparée, caractérisé en ce que le moyen de serrage (20) et l'élément de plaque (26) sont intégrés dans un corps presseur amovible (18).

2. Manchon selon la revendication 1, caractérisé en ce que, dans les conditions opératoires, ledit moyen de serrage (20) est capable d'exercer une pression multidirectionnelle dans le plan de l'ouverture du cadre (1).

3. Manchon selon la revendication ou la revendication 2, caractérisé en ce que le moyen de serrage (20) constitue un moyen de serrage mécanique, pneumatique, électromagnétique et/ou hydraulique.

4. Manchon selon la revendication 1, 2 ou 3, caractérisé en ce que ledit moyen de serrage (20) est constitué d'au moins un arbre rotatif (21) prévu avec au moins une came (23).

5. Manchon selon la revendication 4, caractérisé en ce que ledit arbre (21) peut être saisi de l'extérieur, de façon à être tourné.

6. Manchon selon l'une quelconque des revendications précédentes 1 à 5, caractérisé en ce que lesdits blocs (27) sont prévus, au moins suivant une partie de leur longueur, avec des nervures internes circonférentielles, et que les blocs (27) dont les côtés extérieurs viennent buter contre une paroi intérieure du cadre (1), dans les conditions opératoires du manchon, sont au moins partiellement pourvus de nervures externes (29) sur la face extérieure.

7. Manchon selon l'une quelconque des revendications précédentes 1 à 6, caractérisé en ce que les blocs (27) et le corps presseur (18) sont dimensionnés de telle façon que, dans les conditions opératoires du manchon, ils s'étendent vers l'extérieur sur au moins un côté du cadre (1), dans une direction transversale au plan du cadre (1), tandis que le corps presseur (18) dont les faces extérieures reposent contre une paroi intérieure du cadre (1), dans les conditions opératoires du manchon, est pourvu de nervures externes (19) le long d'au moins une partie de sesdites faces extérieures.

8. Manchon selon l'une quelconque des revendications précédentes 1 à 7, caractérisé en ce que les blocs (27) qui sont placés les uns au dessus des autres, dans les conditions opératoires du manchon, sont pourvus d'un profil sur leurs faces extérieures adjacentes.

9. Manchon selon l'une quelconque des revendications précédentes 1 à 8, caractérisé en ce que les blocs (27) sont dimensionnés de telle façon que, dans les conditions opératoires du manchon, ils s'étendent vers l'extérieur sur les deux côtés du cadre (1), dans une direction transversale au cadre (1).

10. Manchon selon l'une quelconque des revendications précédentes 1 à 8, caractérisé en ce que les nervures extérieures et/ou intérieures (19, 29) ont une section transversale en dent de scie ou triangulaire.

11. Corps presseur (18) pouvant être utilisé dans un manchon conforme à l'une quelconque des revendications 1 à 10, dans lequel le corps presseur (18) contient un bloc d'un matériau résilient, un moyen de serrage (20) et au moins un élément de plaque (26), caractérisé en ce que le moyen de serrage (20) et l'élément de plaque (26) sont intégrés dans le corps presseur (18).
